# EUROPEAN PATENT SPECIFICATION

(11) **EP 3 164 878 B1**
(45) Date of publication and mention of the grant of the patent: **04.04.2018**
(21) Application number: 14734501.1
(22) Date of filing: 03.07.2014
(51) Int. Cl.: H01H 9/54, H02M 7/12

(54) **INRUSH CURRENT LIMITATION DURING SYSTEM ENERGIZING**
EINSCHALTSTROMBEGRENZUNG WÄHREND DER SYSTEMERREGUNG
LIMITATION DU COURANT D'APPEL PENDANT LA MISE SOUS TENSION D'UN SYSTÈME

(43) Date of publication of application: 10.05.2017
(73) Proprietor: ABB Schweiz AG, 5400 Baden (CH)
(72) Inventor: BAOLIANG, Sheng, 771 43 Ludvika (SE)
(74) Representative: Axell, Kristina
(86) International application number: PCT/EP2014/064152
(87) International publication number: WO 2016/000774

(56) References cited:
- WO-A1-2013/127463
- US-A1- 2011 102 052
- US-A1- 2014 079 960

## Description

### TECHNICAL FIELD

The invention generally related to energizing of devices in direct current power transmission systems. More particularly, the invention relates to a current handling device for connection in series with a transmission medium and a method of handling high current levels in a direct current power transmission system.

### BACKGROUND

Voltage source converter (VSC) HVDC systems can use both over-headlines and cables for power transmission. When a transmission line is long or a cable is used in the transmission system the stray capacitance of the transmission line/cable is large. This will lead to a high inrush/charging current during system energizing.
In these systems there is often also needed a circuit breaker in order to disconnect the power line or cable during pole faults, such as pole-to-ground faults. A DC breaker may then comprise a main electronic switch made up of a number of series-connected switches in parallel with a surge arrester.
This may act on such an inrush current, which is not desirable.
It is known to use a DC breaker also for current limitation.
In this case, in order to energize a DC system, the DC breaker is switched on section by section and a surge arrester of the DC breaker is then used to limit the inrush charging current or fault current. This type of control is for instance described in WO 2011/057675. For this type of operation there is needed surge arrester having a large capacity. Furthermore the operating frequency with which this type of operation is repeated cannot be high as there is certain heat dissipation time (time constant) for the surge arrester.

WO 2013/127463 discloses another current handling device for connection in series with a direct current power transmission medium. There is in view of what has been described above a need for an improvement in the provision of inrush current limitation during energizing combined with fault current handling.
There is in view of what has been described above a need for improvement in the provision of such current limitation in a DC system.

### SUMMARY

One object of the invention is thus to provide an improvement when providing inrush current limitation and fault current handling.
This object is according to a first aspect achieved by a current handling device for connection in series with a direct current power transmission medium, the current handling device comprising a set of parallel branches, the branches comprising
a main branch comprising at least one circuit breaker switch element and an auxiliary branch comprising at least one resistor in series with an auxiliary switch, where the main branch is a part of a circuit breaking arrangement of the current handling device and the auxiliary switch is operative to close upon the occurrence of a high inrush energizing current in order to provide a current limitation path through the auxiliary branch.
This object is according to a second aspect also achieved by a method of handling high current levels in a direct current power transmission system, the method being performed in a current handling device connected in series with a power transmission medium, where the current handling device comprises a set of parallel branches, the branches comprising a main branch comprising at least one circuit breaker switch element and an auxiliary branch comprising at least one resistor in series with an auxiliary switch, the method comprising
closing said auxiliary switch upon the occurrence of a high inrush energizing current in order to provide a current limitation path through the auxiliary branch.

The invention according to the above-mentioned aspects has a number of advantages. The components in the circuit breaker arrangement do not have to be sized for handling energizing currents. Therefore the components of the device may have standardized values. The circuit breaker arrangement may also act as a full function Direct Current (DC) breaker that can be operated to provide open/close operation without involvement of other equipment in the system. This is also combined with current limiting capability during energizing. The invention also allows a DC system to be energized in a simple way and can be used in conjunction with the use of the circuit breaker arrangement.

It should be emphasized that the term "comprises/comprising" when used in this specification is taken to specify the presence of stated features, integers, steps or components, but does not preclude the presence or addition of one or more other features, integers, steps, components or groups thereof.

### BRIEF DESCRIPTION OF THE DRAWINGS

The present invention will in the following be described with reference being made to the accompanying drawings, where
fig. 1 schematically shows a simple HVDC system comprising a power transmission medium in the form of a power line or cable connected to a current control device,
fig. 2 schematically shows a multi-terminal HVDC system comprising a number of power transmission lines or cables, each connected to a current control device,
fig. 3 schematically shows the structure of a first embodiment of the current control device,
fig. 4 schematically shows the structure of a second embodiment of the current control device, and
fig. 5 schematically shows a flow chart of a number of method steps performed by a control unit of the current control device.

### DETAILED DESCRIPTION

In the following, a detailed description of preferred embodiments of the invention will be given.

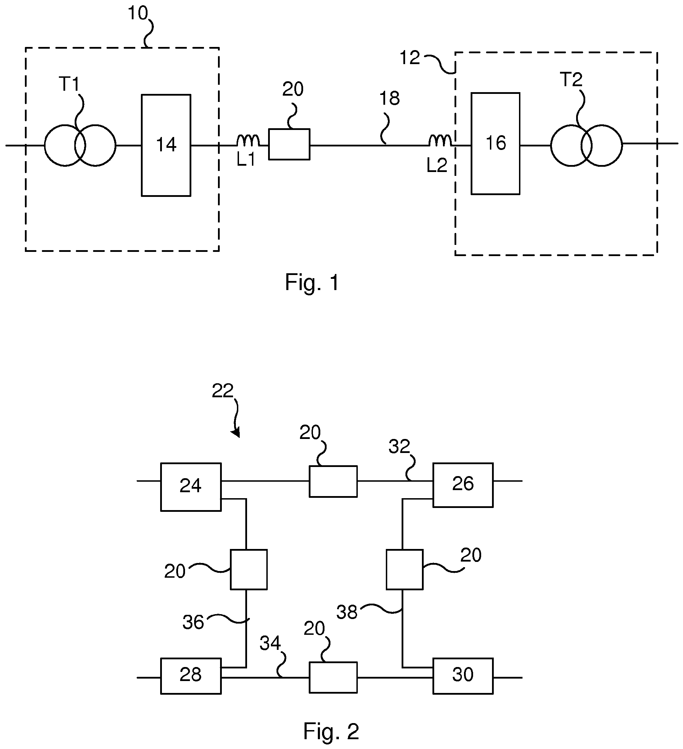

Fig. 1 shows one variation of a high voltage direct current (HVDC) power transmission system.

The system in fig. 1 is a point-to-point system for connection between two Alternating Current (AC) power transmission systems. For this reason the HVDC system includes a first and a second converter station 10 and 12, where the first converter station 10 includes a first transformer T1. The first converter station 10 also comprises a first converter 14 for conversion between AC and DC, which converter therefore comprises an AC side connected to the transformer T1 and a DC side connected to a first reactor L1. The first transformer T1 thus connects the first converter 14 to the first AC power transmission system (not shown). The first converter 14 is connected to a second converter 16 of a second converter station 12 via a DC transmission medium 18, which DC transmission medium may be a power line or cable 18. As described earlier, the first converter 10 may here be connected to a first end of the transmission medium via a first reactor L1 and the second converter may be connected to a second end of the transmission medium 18 via a second reactor L2. The second converter 16 also converts between AC and DC and may be an inverter. The second converter station 12 may also include a second transformer T2, which connects the second converter 16 to the second AC power transmission system (not shown).

The converters 14 and 16 may be any type of converters, such as line-commutated Current Source Converters (CSC) or forced commutated Voltage Source Converters (VSC). The converters may more particularly comprise a number of converter valves. A voltage source converter may be a two-level voltage source converter or a multi-level voltage source converter employing cells. In series with the transmission medium there is finally also a current handling device 20. Although only one is shown, it should be realized that there may be one such device in the proximity of a converter, for instance in proximity of each converter. There may thus be a device on opposite sides of the transmission medium 18.

The HVDC system in fig. 1 is a monopole system. It should however be realized that the system may also be a bipole system.

Fig. 2 shows another type of HVDC system. The system is here a multi-terminal HVDC system, such as an HVDC system comprising a number of converters converting between AC and DC. Each converter comprises an AC side and a DC side, where the DC side of a third converter 24 is connected to the DC side of a fourth converter 26 via a power transmission medium in the form of a second DC line or cable 32, the DC side of a fifth converter 28 is connected to the DC side of a sixth converter 30 via a third DC line or cable 34. There is also a fourth DC line or cable 36 interconnecting the DC sides of the third and the fifth converters 23 and 28 as well as a fifth DC line or cable 38 interconnecting the DC sides of the fourth and sixth converters 26 and 30.

As can also be seen there is a corresponding current handling device 20 connected in series with all the power lines 32, 34, 36 and 38.

In the system there may also be tapping converters for tapping power from the transmission lines. There may also be long distances between two converter stations. It is also possible that a converter station lacks a local power supply. These are factors that may give rise to high inrush currents during energizing of a converter station. As can also be seen there is in all the power lines 32, 34, 36 and 38 a current handling device 20.

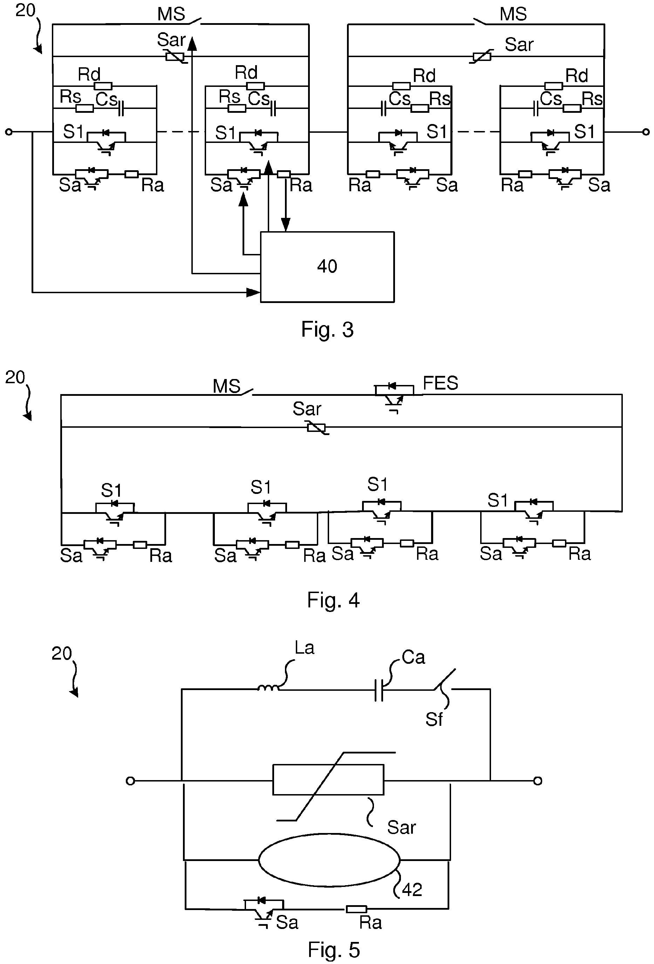

Fig. 3 shows a first embodiment of the current handling device 20. The current handling device 20 may be made up of one or more series connected blocks, where two blocks are shown in fig. 3. In such a block there may be a set of parallel branches. In this example the set is made up of four parallel branches. There is a first resistive branch comprising a resistor Rd, a second branch comprising a resistor Rs in series with a capacitor Cs, a third branch with a main switch S1 and a fourth branch with a series connection of an auxiliary switch Sa and a resistor Ra. The third branch is here also termed a main branch and the fourth branch an auxiliary branch. The main switch S1 is here a circuit breaker switch element because it is a switch that can be used to break the connection to the transmission medium.

It can be seen that in a block there are a number of such sets connected in series with each other, where only two are shown in fig. 3

Furthermore in a block there is a mechanical switch branch comprising a mechanical switch MS and a surge arrester branch comprising a surge arrester Sar, both connected in parallel with the series-connected sets of branches, The mechanical switch MS is here also a circuit breaker switch element.

The elements of the auxiliary branches are here used for limiting current while the rest of the elements of the device are used for providing circuit breaking functionality.

There is also a control unit 40 which is shown as obtaining current measurements from the power line as well as from a resistor Ra in an auxiliary branch of a main switch and current limiting unit. The control unit 40 also provides control signals for the auxiliary switch Sa and main switch S1 of the same main switch and current limiting unit as well as to the mechanical switch MS.

Finally there may be at least one heat sink (not shown). In this first embodiment this heat sink is shared by the auxiliary switch Sa and main switch S1 and possibly also by the auxiliary resistor Ra.

In the figure the control signals are only shown for one block and furthermore for one set of branches in this block. It should however be realized that control signals may in fact be sent to all switches of all blocks. The control unit 40 may thus send control signals to all switches of the current handling device 20.

Fig. 4 shows a second embodiment of the current handling device 20, however without the control unit. In this figure there is only one block comprising a number of sets of parallel branches. It should however be realized that it could comprise more blocks. In this example the number of sets of branches in the block is four. However, also this may be varied. Furthermore, in this second embodiment a set of branches does not comprise the first and second branches with resistor Rd and resistor and capacitor Rs and Cs, but only the main branch and auxiliary branch.

However, there is a mechanical switch branch and surge arrester branch in parallel with the set of branches, where the mechanical switch branch comprises a fast electronic switch FES in addition to the mechanical switch MS and the surge arrester branch comprises a surge arrester Sar. Also in this case the main switch S1, mechanical switch MS and fast electronic switch are circuit breaker switch elements..

Fig. 5 shows yet another embodiment of the current handling device 20. Also this device comprises a set of parallel branches. However, there is only one set. There is here a first branch with an inductor La, capacitor Ca and a further switch Sf connected in series. There is a second branch with a surge arrester Sar. There is a third branch with a mechanical switch 42 comprising a gas-filled enclosure with mechanically separable arms. There is finally a fourth auxiliary branch with a resistor Ra and auxiliary switch Sa. Here the mechanical switch 42 and further switch Sf are circuit breaker switch elements.

In all of the above shown embodiments, the auxiliary branches comprising auxiliary switches Sa and resistors Ra are all used for inrush current limitation during energizing, while the circuit breaker switch elements are essentially elements of a circuit breaker arrangement used for breaking the connection of a DC transmission medium in case of faults like pole-to-ground faults.

Furthermore, it should be realized that the circuit breaker arrangements shown above are merely a few different examples of a great variety of circuit breaker arrangements that may be combined with one or more auxiliary branch for forming a current handling device.

As mentioned initially, when an HVDC system is being energized, for instance when the capacitors in a converter station are being energized, then the inrush current may be high, especially if the stray capacitances of the transmission medium are high because of long transmission lines and/or the use of cables. This will lead to a high inrush/charging current during system energizing, which may be mistakenly identified as a fault current.

This inrush current may also be influenced by such facts that the converter lacks a local power supply and that power tapping is performed between the energy provider and the station being energized. This means that the current delivered from a source may be higher than needed because of these circumstances. It may therefore be necessary to limit this current at this source or at least before it is provided to the transmission medium leading to the station.

The amplitude of this inrush current can therefore be several times higher than the nominal DC current and initiate an over-current protection trip of a DC breaker. When the VSC HVDC systems are designed for offshore platforms, powering islands, tapping power of HVDC transmission systems and city center in-feed then the add up of receiving end inverter energy capacitance to the system will further increase the inrush current peak.

Many AC systems connected to a DC system are equipped with charging current limiting devices. In some instances it is possible to use these charging current limiting devices to also limit the DC line/cable energizing current. However, they cannot be used in all instances, especially if the DC system has an auto-reclose request after fault or a full switching/breaking functionality is needed in the DC breaker.

Also a reactor in series with the transmission medium, may be possible to use for current limitation. If the reactor is large it is able to increase the system transient impedance and as a consequence decrease the charging current peak.

The circuit breakers are thus used for breaking the connection in case of faults. It is also known to use the circuit breaker arrangement shown in fig. 4 for current limitation, something that is described in US 2012/0299393. This document discloses that the main switches S1 are controlled for making the surge arrester Sar to be used for current limitation. In this case the DC system is energized through switching on the DC breaker set by set, and use the surge arrester Sar to limit the inrush charging current or fault current. When the surge arrester Sar is used in this way it has to have a large capacity. Furthermore, the operating frequency cannot be high as there is a certain heat dispassion time (time constant) for the surge arrester Sar.

The circuit breaker arrangement, i.e. the current handling device without auxiliary branch, is unsuitable for inrush current limitation when performing energizing of a substation that lacks local power generation or is connected to the source of energy using a transmission medium having a large stray capacitance. Energizing does in this case require full connection of the system and a high capacity pre-insertion resistor in a sending end AC breaker, i.e. in an AC breaker close to the end of the system where power is sent for energizing one or more converter stations.

Even if the above mentioned DC breaker section switching method can decrease the inrush current and avoid DC breaker over current trip during energizing, the large capacity surge arrester requirement leads to the DC breaker itself being large and costly. The high temperature time constant of the surge arrester Sar limits the operating frequency of the circuit breaker arrangement to a low level. After each operating sequence the surge arrester Sar needs more than half of an hour cooling down time before being operated anew.

Furthermore, both the large DC side reactor and high power DC breaker surge arrester are expensive. They will also occupy a lot of space in a substation. A substation may already be very large because of the size of converter valves and transformers, why this is often not desirable.

When a current handling device according to the invention is used, then a normally sized reactor and a normally dimensioned and operated circuit breaking section may be employed. There is furthermore no need for local power generation.

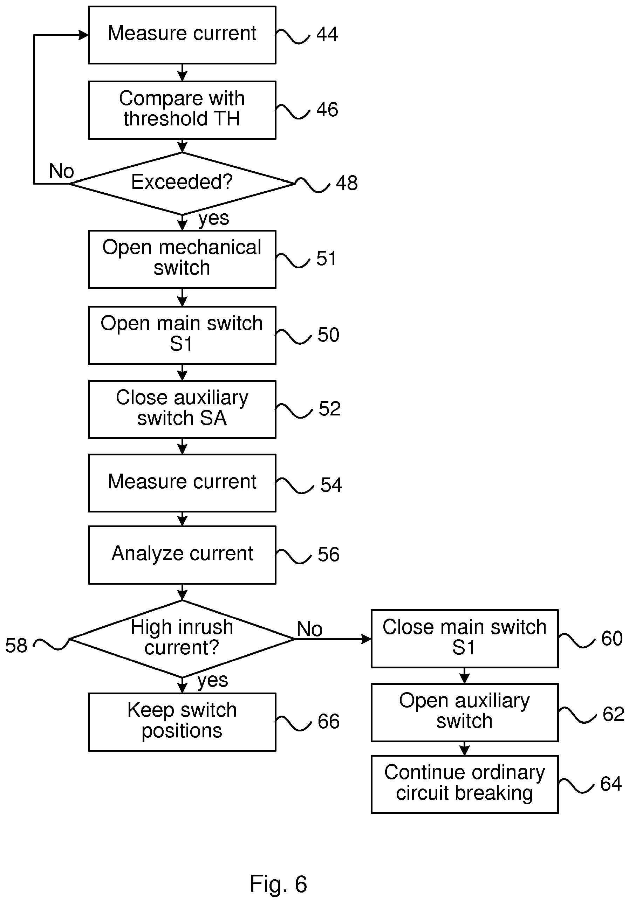

The operation of a current handling device will now be described for the first embodiment in fig. 3 in the system according to fig. 1 and with reference also being made to fig. 6, which shows a flow chart of a number of method steps in a method of handling high current levels in a direct current power transmission system being performed by the control unit 40. It should be realized that similar or equivalent method steps could be performed in the current handling devices of the other embodiments.
It may here be assumed that the second converter station 12 needs to be energized by the first converter station via the transmission medium 18, where there may be tapping points inbetween the the current handling device and the second converter station 12 and the second converter station may lack local power supply.
The current handling device may thus here be connected to the opposite side of the transmission medium than the converter station 12 being energized. The converter station 12 may be connected to one end of the transmission medium, while the current handling device 20 is connected to an opposite end.

In normal operation the mechanical switch MS is closed and the main and auxiliary switches S1 and Sa are open. In this case there is thus a current path through the mechanical switch MS via which power is transmitted.

In operation the auxiliary switch of an auxiliary branch in a set is operative to close upon the occurrence of a high inrush energizing current in order to provide a current limitation path through the auxiliary branch. This closing may furthermore be made when circuit breaker switch elements in parallel branches are open. If there is more than one set of branches, then this type of operation may be performed for one or more of these sets.

The operation of the control unit 40 may start when a high current level of the current passing through the transmission medium is detected. The current is thus measured, step 44, and the current level is compared with a current threshold TH, step 46. If the threshold is not exceeded, step 48, then the control unit 40 returns and performs further measurements, step 44. However, if the threshold TH is exceeded then there is either a high energizing current that needs to be lowered or a fault, such as a pole-to-ground fault. The threshold TH is here a threshold that detects a current level which is indicative of the fact that there is too high a current, where this current may be either a fault current or a high inrush current used to energize the converter. The detection is thus a peak detection.

If the threshold is exceeded then control unit 40 performs ordinary circuit breaking operations in the circuit breaker arrangement together with closing of one or more of the auxiliary switches Sa. The ordinary circuit breaking operations may in the example in fig. 3 comprise the control unit 40 opening the mechanical switch MS, step 49, and at least one of the main switches S1, step 50. In the opening, especially of the mechanical switch MS, the main switches S1 may furthermore be operated in order to together with the resistive and capacitive/resistive branches with resistors Rd and Rs and capacitors Cs create a current zero crossing allowing the mechanical switch MS to open. Furthermore before a main switch S1 is finished getting opened, the auxiliary switch Sa in parallel with this main switch S1 may get closed. An auxiliary switch in parallel with a main switch that remains closed will also remain open. The operation of the mechanical and main switches MS and S1 may here follow a known procedure followed when opening a circuit breaker.

The number of main switches being opened will depend on the number of resistors that it is desirable to connect in series with the transmission medium. This may range from one to all main switches.

The control unit 40 then obtains further current measurements, step 54, for instance via the current limiting resistors Ra. The current may here be measured during a long enough time in order to determine the characteristics of the current. The further current measurements are then analyzed, step 56, which may involve analysing the characteristics of the current.

The analysis may involve a determination of if the current is a high inrush current due to energizing or a fault current. An inrush current that energizes a converter station may essentially be capacitive in nature, while a fault current may be resistive. The analysis may therefore comprise analyzing the capacitive content and the resistive content of the inrush current and determining that the current is a high inrush current if it is predominantly capacitive. In case the current is predominantly resistive instead, then the control unit 40 may determine that the current is a fault current.

If the current is found to be a fault current, step 58, i.e. is not a high inrush current, then fault current handling resumes. This may be done through the main switches S1 that were opened again getting closed, step 60, and the auxiliary switches Sa that were closed again getting opened, step 62.

Thereafter ordinary circuit breaking operation ensues, step 64. This may involve opening the main switches S1 in order to let the surge arrester handle the fault current.

The fault may then eventually be cleared and when this has taken place it is again possible to close the circuit breaker, which may be done through closing the mechanical switch MS and opening the main switches S1 in a manner known per se.

If however the current is a high inrush current, step 58, then the switch positions are kept or retained, step 66. In this case the resistors Ra remain connected through the auxiliary switches Sa remaining closed and the main switches S1 and mechanical switch MS remaining open.

It is here possible that a certain degree of current limitation is desired, which degree may be determined by the control unit 40 based on the analysis of the current. Therefore a number of resistors Ra corresponding to the desired degree of current limitation may be connected in series. The control unit 40 may thus select a number of resistors Ra to be connected in series with the transmission medium for limiting the current and control the auxiliary switches of the auxiliary branches and the main switches of the main branches to connect the selected resistors in series with the transmission medium. This may more particularly involve controlling the auxiliary switches Sa of the auxiliary branches with the selected resistors Ra to be closed in order to connect these resistors in series. In this case the corresponding main switches S1 are opened. For those resistors that are not to be used, the corresponding auxiliary switches Sa are opened and the main switches S1 closed.

Furthermore, if the inrush current drops below a safety threshold where inrush current limitation is no longer needed, then the control unit 40 may further open the auxiliary switches Sa and close the circuit breaker arrangement. This may comprise closing switches in branches that are parallel to auxiliary branches having closed auxiliary switches followed by opening of these auxiliary switches. The closing of the circuit breaker arrangement may also involve making sure that the mechanical switch MS gets closed and the main switches S1 get opened. The closing and opening activities of the mechanical and main switches MS and S1 may here follow the general principles used when closing a circuit breaker after clearing a fault.

It can in this way be seen that the auxiliary resistors are used for limiting the current when there is a high inrush current and if there is a fault then normal fault handling using the surge arrester is provided.

The described embodiments allow the circuit breaker arrangement to act as a full function DC breaker that can be operated to provide open/close operation without involvement of other equipment in the system. This is also combined with current limiting capability during energizing.

The current handling device also allows the provision of a universal/standard design of the circuit breaker arrangement that can be used in different HVDC systems (especially for long transmission line/cable, remote power sending without local power generation, DC grids) as the surge arrester energy capacity doesn't need to be changed.

The current handling device provides a simple solution to make the DC system energizing easy and feasible when DC breaker functionality is used in the HVDC system.

The use of a common heat sink provides further advantageous size reductions. The selective connection of resistors in series with the transmission medium allows the provision of an adaptive current limitation.

While the invention has been described in connection with what is presently considered to be most practical and preferred embodiments, it is to be understood that the invention is not to be limited to the disclosed embodiments, but on the contrary, is intended to cover various modifications and equivalent arrangements. Therefore the invention is only to be limited by the following claims.

## Claims

1. A current handling device (20) for connection in series with a direct current power transmission medium (18; 32, 34, 36, 38), the current handling device (20) comprising
a set of parallel branches, said branches comprising
a main branch comprising at least one circuit breaker switch element (S1) and an auxiliary branch comprising at least one resistor (Ra) in series with an auxiliary switch (Sa), where the main branch is a part of a circuit breaking arrangement of the current handling device and said auxiliary switch (Sa) is operative to close upon the occurrence of a high inrush energizing current in order to provide a current limitation path through the auxiliary branch and
a control unit (40) configured to open at least one circuit breaker switch element (S1) in a main branch parallel to the auxiliary branch and close said auxiliary switch (Sa) upon detecting a current through the transmission medium exceeding a current threshold (TH), obtain measurements of the current through the auxiliary branch, analyze the current measurements, determine if the current is a high inrush current or a fault current based on the analysis, open the auxiliary switch (Sa) in the case of a fault current and keep the auxiliary switch (Sa) closed in the case of a high inrush current.

2. The current handling device according to claim 1, wherein the auxiliary switch (Sa) in said auxiliary branch is closed when circuit breaker switch elements (S1; S1; 42, Sf) in parallel branches are open.

3. The current handling device according to claim 1 or 2, wherein the control unit (40) is further configured to keep opened circuit breaker switch elements open in the case of a high inrush current and to close circuit breaker switch elements in the branches parallel to the auxiliary branch in the case of a fault current.

4. The current handling device according to any previous claim, the control unit being further configured to, in the case of a high inrush current and after the inrush current has dropped below a safety threshold, close circuit breaker switch elements in branches that are parallel to the auxiliary branch and open the auxiliary switch.

5. The current handling device according to any previous claim, the control unit being further configured to, in the case of a fault current, close at least one circuit breaker switch element after clearing the fault for obtaining a power transmission path through the device.

6. The current handling device according to any previous claim, wherein there are a number of series connected sets of parallel branches and the control unit is configured to, in the case of a high inrush current, select a number of resistors to be connected in series with the transmission medium and control the auxiliary switches of the auxiliary branches and the main switches of the main branches to connect the selected resistors in series with the transmission medium.

7. The current handling device according to any previous claim, wherein the control unit (40) when analyzing the measured current is configured to analyze the capacitive content and the resistive content of the measured current and determine that the current is a high inrush current if it is predominantly capacitive or determine that the current is a fault current if it is predominantly resistive.

8. The current handling device according to any previous claim, being connected to one end of the transmission medium, where a device being energized is connected to an opposite end of the transmission medium.

9. A method of handling high current levels in a direct current power transmission system, the method being performed in a current handling device (20) connected in series with a power transmission medium (18; 32, 34, 36, 38), where the current handling device comprises a set of parallel branches, said branches comprising a main branch comprising at least one circuit breaker switch element (S1) and an auxiliary branch comprising at least one resistor (Ra) in series with an auxiliary switch (Sa), the method comprising
opening (50) at least one circuit breaker switch element (S1) in a main branch parallel to the auxiliary branch,
closing (52) said auxiliary switch (Sa) upon detecting a current through the transmission medium exceeding (48) a current threshold (TH) in order to provide a current limitation path through the auxiliary branch,
obtaining (54) measurements of the current through the auxiliary branch, analyzing (56) the current measurements,
determining (58) if the current is a high inrush current or a fault current based on the analysis,
keeping (66) the auxiliary switch (Sa) closed in the case of a high inrush energizing current, and
opening (62) the auxiliary switch (Sa) in the case of a fault current.

10. The method according to claim 9, wherein the auxiliary switch (Sa) in said auxiliary branch is closed when circuit breaker switch elements (S1, S1; 42, Sf) in parallel branches are open.

11. The method according to claim 9 or 10, further comprising keeping opened circuit breaker switch element s open in the case of a high inrush current and closing (69) circuit breaker switch elements (S1) in the branches parallel to the auxiliary branch in the case of a fault current.

12. The method according to any of claims 9 - 11, further comprising, in the case of a high inrush current and after the inrush current has dropped below a safety threshold, closing circuit breaker switch elements in branches that are parallel to the auxiliary branch and opening the auxiliary switch.

13. The method according to any of claims 9 - 12, wherein there are a number of series connected sets of parallel branches and the closing of said auxiliary switch upon the occurrence of a high inrush energizing current comprises selecting a number of resistors to be connected in series with the transmission medium and controlling the auxiliary switches of the auxiliary branches and the main switches of the main branches to connect the selected resistors in series with the transmission medium.

14. The method according to any of claims 9 - 13, wherein the analyzing of the measured current comprises analyzing the capacitive content and the resistive content of the measured current and determining that the current is a high inrush current if it is predominantly capacitive and determining that the current is a fault current if it is predominantly resistive.

## Patentansprüche

1. Stromhandhabungsvorrichtung (20) zur Reihenschaltung mit einem Gleichstrom-Leistungsübertragungsmedium (18; 32, 34, 36, 38), wobei die Stromhandhabungsvorrichtung (20) umfasst:
eine Gruppe paralleler Zweigleitungen, wobei die Zweigleitungen umfassen:
eine Hauptzweigleitung, umfassend wenigstens ein Schutzschalterelement (S1) und eine Zusatzzweigleitung, die wenigstens einen Widerstand (Ra) in Reihe mit einem Hilfsschalter (Sa) umfasst, wobei die Hauptzweigleitung ein Teil einer Schutzschaltungsanordnung der Stromhandhabungsvorrichtung ist und der Hilfsschalter (Sa) dazu betreibbar ist zu schließen, wenn ein hoher Einschalterregerstrom auftritt, um einen Strombregrenzungspfad über die Zusatzzweigleitung bereitzustellen, und
eine Steuereinheit (40), die dafür ausgelegt ist, wenigstens ein Schutzschalterelement (Si) in einer Hauptzweigleitung parallel zur Zusatzzweigleitung zu öffnen und den Hilfsschalter (Sa) zu schließen, wenn erkannt wird, dass ein Strom durch das Übertragungsmedium einen Stromschwellwert (TH) übersteigt, Messungen des Stroms durch die Zusatzzweigleitung zu gewinnen, die Strommessungen zu analysieren, basierend auf der Analyse zu bestimmen, ob der Strom ein hoher Einschaltstrom oder ein Fehlerstrom ist, im Fall eines Fehlerstroms den Hilfsschalter (Sa) zu öffnen und im Fall eines hohen Einschaltstroms den Hilfsschalter (Sa) geschlossen zu halten.

2. Stromhandhabungsvorrichtung gemäß Anspruch 1, wobei der Hilfsschalter (Sa) in der Zusatzzweigleitung geschlossen ist, wenn Schutzschalterelemente (S1; S1; 42, Sf) in parallelen Zweigleitungen offen sind.

3. Stromhandhabungsvorrichtung gemäß Anspruch 1 oder 2, wobei die Steuereinheit (40) ferner dafür ausgelegt ist, geöffnete Schutzschalterelemente im Fall eines hohen Einschaltstroms offen zu halten und Schutzschalterelemente in den Zweigleitungen parallel zur Zusatzzweigleitung im Fall eines Fehlerstroms zu schließen.

4. Stromhandhabungsvorrichtung gemäß einem der vorstehenden Ansprüche, wobei die Steuereinheit ferner dafür ausgelegt ist, im Fall eines hohen Einschaltstroms und nachdem der Einschaltstrom unter einen Sicherheitsschwellwert abgefallen ist, Schutzschalterelemente in Zweigleitungen parallel zur Zusatzzweigleitung zu schließen und den Hilfsschalter zu öffnen.

5. Stromhandhabungsvorrichtung gemäß einem der vorstehenden Ansprüche, wobei die Steuereinheit ferner dafür ausgelegt ist, im Fall eines Fehlerstroms wenigstens ein Schutzschalterelement zu schließen, nachdem der Fehler behoben ist, um einen Leistungsübertragungsweg durch die Vorrichtung zu erhalten.

6. Stromhandhabungsvorrichtung gemäß einem der vorstehenden Ansprüche, wobei es eine Anzahl von in Reihe geschalteten Gruppen paralleler Zweigleitungen gibt und die Steuereinheit dafür ausgelegt ist, im Fall eines hohen Einschaltstroms eine Anzahl von Widerständen auszuwählen, die mit dem Übertragungsmedium in Reihe geschaltet werden sollen, und die Hilfsschalter der Zusatzzweigleitungen sowie die Hauptschalter der Hauptzweigleitungen zu steuern, um die ausgewählten Widerstände mit dem Übertragungsmedium in Reihe zu schalten.

7. Stromhandhabungsvorrichtung gemäß einem der vorstehenden Ansprüche, wobei die Steuereinheit (40) bei der Analyse des gemessenen Stroms dafür ausgelegt ist, den kapazitiven Anteil und den resistiven Anteil des gemessenen Stroms zu analysieren und zu bestimmen, dass der Strom ein hoher Einschaltstrom ist, wenn er überwiegend kapazitiv ist, bzw. zu bestimmen, dass der Strom ein Fehlerstrom ist, wenn er überwiegend resistiv ist.

8. Stromhandhabungsvorrichtung gemäß einem der vorstehenden Ansprüche, die mit einem Ende des Übertragungsmediums verbunden ist, wobei eine Vorrichtung, die erregt wird, mit einem entgegengesetzten Ende des Übertragungsmediums verbunden ist.

9. Verfahren zum Handhaben hoher Strompegel in einem Gleichstrom-Leistungsübertragungssystem, wobei das Verfahren in einer Stromhandhabungsvorrichtung (20) ausgeführt wird, die mit einem Leistungsübertragungsmedium (18; 32, 34, 36, 38) in Reihe geschaltet ist, wobei die Stromhandhabungsvorrichtung eine Gruppe paralleler Zweigleitungen umfasst, die Zweigleitungen eine Hauptzweigleitung umfassen, welche wenigstens ein Schutzschalterelement (S1) und eine Zusatzzweigleitung umfasst, die wenigstens einen Widerstand (Ra) in Reihe mit einem Hilfsschalter (Sa) umfasst, wobei das Verfahren umfasst:
Öffnen (50) wenigstens eines Schutzschalterelements (S1) in einer Hauptzweigleitung parallel zur Zusatzzweigleitung,
Schließen (52) des Hilfsschalters (Sa), sobald erkannt wird, dass ein Strom durch das Übertragungsmedium (48) einen Stromschwellwert (TH) übersteigt, um einen Strombregrenzungspfad durch die Zusatzzweigleitung bereitzustellen,
Gewinnen (54) von Messungen des Stroms durch die Zusatzzweigleitung,
Analysieren (56) der Strommessungen,
basierend auf der Analyse Bestimmen (58), ob der Strom ein hoher Einschaltstrom oder ein Fehlerstrom ist,
Halten (66) des Hilfsschalters (Sa) im geschlossenen Zustand im Fall eines hohen Einschalterregerstroms, und Öffnen (62) des Hilfsschalters (Sa) im Fall eines Fehlerstroms.

10. Verfahren gemäß Anspruch 9, wobei der Hilfsschalter (Sa) in der Zusatzzweigleitung geschlossen ist, wenn Schutzschalterelemente (S1, S1; 42, Sf) in parallelen Zweigleitungen offen sind.

11. Verfahren gemäß Anspruch 9 oder 10, ferner umfassend, geöffnete Schutzschalterelemente im Fall eines hohen Einschaltstroms offen zu halten und Schutzschalterelemente (S1) in den Zweigleitungen parallel zur Zusatzzweigleitung im Fall eines Fehlerstroms zu schließen (69).

12. Verfahren gemäß einem der Ansprüche 9-11, ferner umfassend, im Fall eines hohen Einschaltstroms und nachdem der Einschaltstrom unter einen Sicherheitsschwellwert abgefallen ist, Schutzschalterelemente in Zweigleitungen parallel zur Zusatzzweigleitung zu schließen und den Hilfsschalter zu öffnen.

13. Verfahren gemäß einem der Ansprüche 9-12, wobei es eine Anzahl von in Reihe geschalteten Gruppen paralleler Zeigleitungen gibt und das Schließen des Hilfsschalters bei Auftreten eines hohen Einschalterregerstroms umfasst, eine Anzahl von Widerständen auszuwählen, die mit dem Übertragungsmedium in Reihe geschaltet werden sollen, und die Hilfsschalter der Zusatzzweigleitungen sowie die Hauptschalter der Hauptzweigleitungen zu steuern, um die ausgewählten Widerstände mit dem Übertragungsmedium in Reihe zu schalten.

14. Verfahren gemäß einem der Ansprüche 9-13, wobei das Analysieren des gemessenen Stroms umfasst, den kapazitiven Anteil und den resistiven Anteil des gemessenen Stroms zu analysieren und zu bestimmen, dass der Strom ein hoher Einschaltstrom ist, wenn er überwiegend kapazitiv ist, und zu bestimmen, dass der Strom ein Fehlerstrom ist, wenn er überwiegend resistiv ist.

## Revendications

1. Dispositif de gestion de courant (20) destiné à être connecté en série à un support de transmission de puissance de courant continu (18 ; 32, 34, 36, 38) le dispositif de gestion de courant (20) comprenant
un ensemble de branches parallèles, les branches comprenant
une branche principale comprenant au moins un élément disjoncteur (S1) et une branche auxiliaire comprenant au moins une résistance (Ra) en série avec un commutateur auxiliaire (Sa), la branche principale faisant partie d'un agencement de disjonction du dispositif de gestion de courant et ledit commutateur auxiliaire (Sa) se fermant à l'occurrence d'un courant d'appel élevé à la mise sous tension afin de fournir un trajet de limitation de courant à travers la branche auxiliaire et
une unité de commande (40) configurée pour ouvrir au moins un élément disjoncteur (S1) dans une branche principale parallèle à la branche auxiliaire et fermer ledit commutateur auxiliaire (Sa) lorsqu'il est détecté qu'un courant à travers le support de transmission dépasse un seuil de courant (TH), obtenir des mesures du courant à travers la branche auxiliaire, analyser les mesures de courant, déterminer que le courant est un courant d'appel élevé ou un courant de défaillance en fonction de l'analyse, ouvrir le commutateur auxiliaire (Sa) dans le cas d'un courant de défaillance et maintenir le commutateur auxiliaire (Sa) fermé dans le cas d'un courant d'appel élevé.

2. Dispositif de gestion de courant selon la revendication 1, dans lequel le commutateur auxiliaire (Sa) dans ladite branche auxiliaire est fermé quand des éléments disjoncteurs (S1; S1; 42, Sf) dans des branches parallèles sont ouverts.

3. Dispositif de gestion de courant selon la revendication 1 ou 2, dans lequel l'unité de commande (40) est configurée en outre pour maintenir ouverts des élément disjoncteurs dans le cas d'un courant d'appel élevé et fermer des éléments disjoncteurs dans les branches parallèles à la branche auxiliaire dans le cas d'un courant de défaillance.

4. Dispositif de gestion de courant selon l'une quelconque des revendications précédentes, l'unité de commande étant configurée en outre pour, dans le cas d'un courant d'appel élevé et après que le courant d'appel a chuté en dessous d'un seuil de sécurité, fermer des éléments disjoncteurs dans des branches qui sont parallèles à la branche auxiliaire et ouvrir le commutateur auxiliaire.

5. Dispositif de gestion de courant selon l'une quelconque des revendications précédentes, l'unité de commande étant configurée en outre pour, dans le cas d'un courant de défaillance, fermer au moins un élément disjoncteur après avoir remédier à la défaillance pour obtenir un trajet de transmission de puissance à travers le dispositif.

6. Dispositif de gestion de courant selon l'une quelconque des revendications précédentes, dans lequel plusieurs ensembles de branches parallèles sont connectés en série et l'unité de commande est configurée pour, dans le cas d'un courant d'appel élevé, sélectionner un nombre de résistances à connecter en série avec le support de transmission et commander les commutateurs auxiliaires des branches auxiliaires et les commutateurs principaux des branches principales pour connecter les résistances sélectionnées en série avec le support de transmission.

7. Dispositif de gestion de courant selon l'une quelconque des revendications précédentes, dans lequel lors de l'analyse du courant mesuré l'unité de commande (40) est configurée pour analyser le contenu capacitif et le contenu résistif du courant mesuré et déterminer que le courant est un courant d'appel élevé s'il est essentiellement capacitif ou déterminer que le courant est un courant de défaillance s'il est essentiellement résistif.

8. Dispositif de gestion de courant selon l'une quelconque des revendications précédentes, connecté à une extrémité du support de transmission, un dispositif excité étant connecté à une extrémité opposée du support de transmission.

9. Procédé de gestion de niveaux de courant élevés dans un système de transmission de puissance de courant continu, le procédé étant exécuté dans un dispositif de gestion de courant (20) connecté en série à un support de transmission de puissance (18 ; 32, 34, 36, 38), dans lequel le dispositif de gestion de courant comprend un ensemble de branches parallèles, les branches comprenant une branche principale comprenant au moins un élément disjoncteur (S1) et une branche auxiliaire comprenant au moins une résistance (Ra) en série avec un commutateur auxiliaire (Sa),
le procédé comprenant
l'ouverture (50) d'au moins un élément disjoncteur (S1) dans une branche principale parallèle à la branche auxiliaire,
la fermeture (52) dudit commutateur auxiliaire (Sa) lorsqu'il est détecté qu'un courant à travers le support de transmission dépasse (48) un seuil de courant (TH) afin de fournir un trajet de limitation de courant à travers la branche auxiliaire,
l'obtention (54) de mesures du courant à travers la branche auxiliaire,
l'analyse (56) des mesures de courant,
la détermination (58) que le courant est un courant d'appel élevé ou un courant de défaillance en fonction de l'analyse,
le maintien (66) du commutateur auxiliaire (Sa) fermé dans le cas d'un courant d'appel élevé, et l'ouverture (62) du commutateur auxiliaire (Sa) dans le cas d'un courant de défaillance.

10. Procédé selon la revendication 9, dans lequel le commutateur auxiliaire (Sa) dans ladite branche auxiliaire est fermé quand des éléments disjoncteurs (S1, S1 ; 42, Sf) dans des branches parallèles sont ouverts.

11. Procédé selon la revendication 9 ou 10, comprenant en outre le maintien d'éléments disjoncteurs ouverts dans le cas d'un courant d'appel élevé et la fermeture (69) d'éléments disjoncteurs (S1) dans les branches parallèles à la branche auxiliaire dans le cas d'un courant de défaillance.

12. Procédé selon l'une quelconque des revendications 9 à 11, comprenant en outre, dans le cas d'un courant d'appel élevé et après que le courant d'appel a chuté en dessous d'un seuil de sécurité, la fermeture d'éléments disjoncteurs dans des branches parallèles à la branche auxiliaire et l'ouverture du commutateur auxiliaire.

13. Procédé selon l'une quelconque des revendications 9 à 12, dans lequel plusieurs ensembles de branches parallèles sont connectés en série et la fermeture dudit commutateur auxiliaire à l'occurrence d'un courant d'appel élevé à la mise sous tension comprend la sélection d'un nombre de résistances à connecter en série avec le support de transmission et la commande des commutateurs auxiliaires des branches auxiliaires et des commutateurs principaux des branches principales pour connecter les résistances sélectionnées en série avec le support de transmission.

14. Procédé selon l'une quelconque des revendications 9 à 13, dans lequel l'analyse du courant mesuré comprend l'analyse du contenu capacitif et du contenu résistif du courant mesuré et la détermination que le courant est un courant d'appel élevé s'il est essentiellement capacitif et la détermination que le courant est un courant de défaillance s'il est essentiellement résistif.
